# EUROPÄISCHE PATENTANMELDUNG

(11) **EP 1 100 057 A1**
(43) Veröffentlichungstag der Anmeldung: **16.05.2001**
(21) Anmeldenummer: 99122472.6
(22) Anmeldetag: 11.11.1999
(51) Int. Cl.: G07F 7/10

(54) **Verfahren zur Bereitstellung eines Zugangkodes für ein Speichermittel**

(71) Anmelder: Europay (Switzerland) SA, 8304 Wallisellen (CH)
(72) Erfinder: Borsos Gabor, 8002 Zürich (CH)
(74) Vertreter: Blum, Rudolf Emil Ernst

(57) **Zusammenfassung**

Zur Erzeugung eines PUK-Kodes bei einer Chip-Karte (1), wird der Kode erzeugt und auf einem Lese- und Eingabegerät (6) dargestellt. Der PUK-Kode wird nur dann von der Karte (1) als gültiger PUK übernommen und gespeichert, wenn der Karteninhaber auf einem Eingabemittel (8) den Kode korrekt eingibt und dieser wieder an den Prozessor übermittelt wird. Auf diese Weise kann das schriftliche Übermitteln des PUK-Kodes an den Karteninhaber entfallen, was einen geringeren Aufwand ergibt und sicherer ist.

## Beschreibung

Die Erfindung betrifft ein Verfahren zur Bereitstellung eines Kodes gemäss Oberbegriff des Anspruchs 1. Ferner betrifft die Erfindung ein Speichermittel gemäss Oberbegriff des Anspruchs 6.

Bei Chipkarten ist es bekannt, für den Karteninhaber einen persönlichen PIN-Kode (PIN = Personal Identification Number) bereitzustellen, welcher in der Regel aus 4 bis 8 Ziffern besteht. Dieser PIN-Kode ermöglicht den Zugriff zu den Informationen und Funktionen der Karte. Weiter ist es bekannt einen sogenannten PUK-Kode (PUK = Personal Unblocking Key) von z.B. 8 Ziffern bereitzustellen, der als Master-Passwort spezielle Verwaltungsfunktionen der Chip-Karte auslöst oder freigibt, z.B. ein Entsperren nach Fehleingaben. Die Verwendung von PIN und PUK ist z.B. bei Chipkarten für Mobiltelefone üblich (SIM-Chip; SIM = Subscriber Identity Module), welche nach dem GSM-Standard (GSM = Global System for Mobile Communication) arbeiten. Der PIN und der PUK werden dabei mittels spezieller Formularbögen an den Karteninhaber übermittelt, die sicherstellen sollen, dass nur der Karteninhaber PIN und PUK erfährt; diese Lösung ist indes aufwendig und bietet keine hundertprozentige Sicherheit.

Der Erfindung liegt deshalb die Aufgabe zugrunde, ein Verfahren zur Bereitstellung mindestens eines der Kodes zu schaffen, welches die genannten Nachteile nicht aufweist.

Diese Aufgabe wird bei dem Verfahren der eingangs genannten Art mit den kennzeichnenden Merkmalen des Anspruchs 1 gelöst.

Dadurch, dass der Kode von der elektronischen Schaltung erst beim Benutzer selber erzeugt wird entfällt die separate Mitteilung des Kodes an den Benutzer, was Kosten spart; dadurch ist es auch ausgeschlossen, dass der Kode vorher in unbefugte Hände gerät. Dadurch, dass zur Übernahme des Kodes als gültiger Kode dieser vollständig eingegeben werden muss, kann der Benutzer dazu angehalten werden, sich diesen Kode zu merken oder ihn aufzuschreiben.

Bevorzugt ist es dabei, wenn der erzeugte Kode vom Benutzer eingegeben werden muss, wenn der Kode bereits auf der Anzeige nicht mehr sichtbar ist. Besonders bei langen PUK-Kodes zwingt dies den Benutzer den Kode zu notieren (was für diese Art Kode erwünscht ist), da die Eingabe eines langen Kodes von z.B. acht Ziffern kaum korrekt aus dem Gedächtnis erfolgt.

Der Erfindung liegt weiter die Aufgabe zugrunde, ein Speichermittel, insbesondere eine Chip-Karte zu schaffen, welche die genannten Nachteile nicht aufweist.

Diese Aufgabe wird mit den kennzeichnenden Merkmalen des Anspruchs 6 gelöst.

Im folgenden werden Ausführungsbeispiele der Erfindung anhand der Figuren näher erläutert. Dabei zeigt
Figur 1 grob schematisch eine Chip-Karte und ein Lese/Eingabegerät dafür; und
Figur 2 ein Flussdiagramm zur Erläuterung der Erzeugung eines PUK-Kodes für eine Chip-Karte.

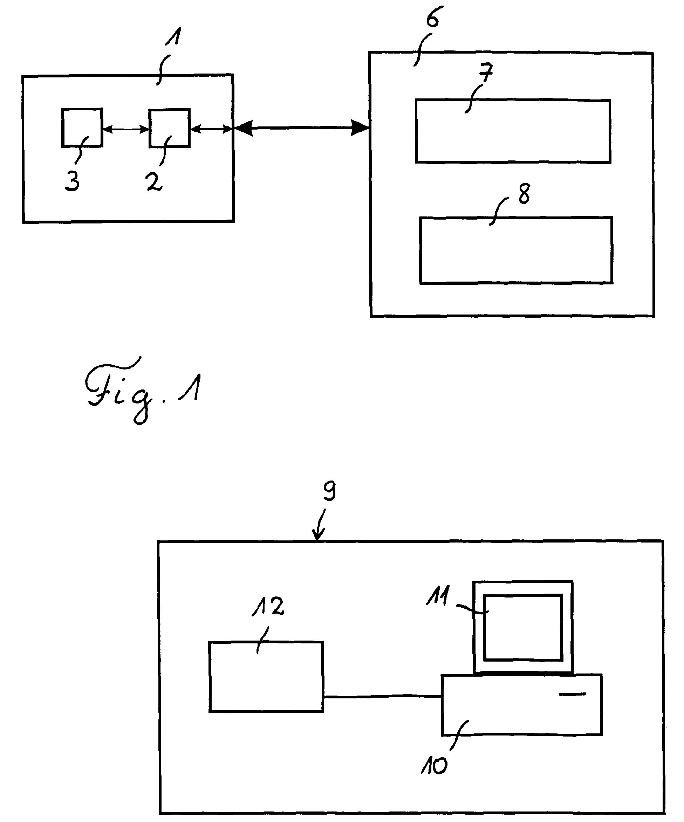

Figur 1 zeigt in schematischer Darstellung eine Chip-Karte 1, welche mit einem Prozessor 2 und einem damit verbundenen Speicher 3 ausgerüstet ist. Derartige Chip-Karten sind bekannt und werden hier nicht weiter grundsätzlich erläutert. Die Chip-Karte 1 kann Daten mit einem Lese- und Eingabegerät 6 austauschen, was durch eine Linie mit Pfeilen zwischen der Karte 1 und dem Gerät 6 angedeutet ist. Das Gerät 6 weist ein Anzeigemittel 7 auf und ein Eingabemittel 8, z.B. eine Tastatur. Anstelle des Lese- und Eingabegerätes 6 könnte auch eine Einheit 9 auf einem Rechner 10 mit Monitor 11 und einem mit dem Rechner 10 verbundenen Kartenleser 12 die nachfolgend beschriebenen Funktionen ausführen. Die nachfolgende Beschreibung erläutert die Erfindung anhand der bevorzugten Erzeugung eines PUK-Kodes bei einer Chip-Karte. Die Erfindung ist aber grundsätzlich auch bei einem anderen Speichermittel und für die Erzeugung eines anderen Kodes anwendbar.

Die in Figur schematisch gezeigte Chip-Karte kann eine Chip-Karte mit beliebigen darauf gespeicherten Daten und vom Prozessor ausführbaren Funktionen sein, wobei der Prozessor zur Erzeugung eines Kodes und zu dessen Abspeicherung ausgestaltet sein muss. Die Kode-Erzeugung kann dabei auf beliebige bekannte Weise erfolgen, wobei vorzugsweise eine Zufallszahl aus acht Ziffern erzeugt wird. Die Chip-Karte ist bevorzugterweise eine Chip-Karte mit einer PKI-Anwendung (PKI = Public Key Infrastructure), die das Erzeugen und das Verwenden von privaten digitalen Schlüsseln und Zertifikaten, z.B. Swiss-Key-Zertifikaten ermöglicht. Weiter ist es mit einer solchen Karte möglich, dass sich der Karteninhaber mittels eines Personalcomputers und Kartenlesers über das Internet z.B. gegenüber Telebanking-Anbietern oder E-Commerce-Betreibern authentisiert. Diese Chip-Karte weist einen PIN-Kode aus z.B. sechs bis acht Ziffern auf und ferner einen PUK-Kode aus acht Ziffern als ein zusätzliches Master-Passwort für Verwaltungsfunktionen der Karte. Dabei ist z.B. die PIN-Eingabe notwendig für die Ausführung von Be-nutzerfunktionen dieser Karte, wie z.B. der Verwendung des digitalen Schlüssels, das Auslesen eines Zertifikates sowie den Wechsel des PIN-Kodes. Eine PUK-Eingabe ist hingegen für Verwaltungsfunktionen wie das Entsperren von gesperrten Schlüsseln (nach dreimaliger Falscheingabe des PIN ist der Schlüssel gesperrt), das Löschen/Überschreiben von Schlüsseln und für eventuelle weitere Verwaltungsfunktionen notwendig. Der PIN-Kode kann durch den Karteninhaber jeder Zeit geändert werden. Wird der PIN-Kode dreimal hintereinander falsch eingegeben, so ist der betreffende Schlüssel gesperrt. Nur durch korrekte PUK-Eingabe wird der Schlüssel entsperrt und kann durch Setzen eines neuen PIN's wieder verwendet werden. Wie dies bei PUK-Kodes üblich ist, kann der PUK durch den Karteninhaber nicht geändert werden. Wird der PUK eine bestimmte Anzahl Male hintereinander falsch eingegeben, so ist diese Anwendung gesperrt und kann mitsamt aller darin gespeicherten Daten (Schlüssel und Zertifikate) nicht mehr benützt werden (und ein neuer PUK muss für die Karte generiert werden). Der PUK soll und muss daher vom Karteninhaber notiert und an einem sicheren Ort aufbewahrt werden. Im Normalfall benötigt der Karteninhaber den PUK, im Gegensatz zum täglichen Gebrauch des PIN's, für lange Zeit nicht, so dass der PUK nicht auswendig gelernt werden soll.

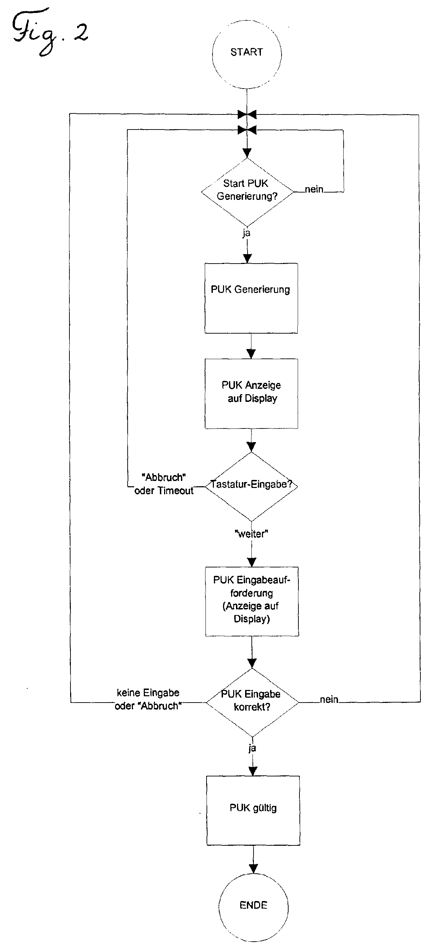

Im folgenden wird die Erfindung anhand der Erzeugung des PUK-Kodes der Chip-Karte erläutert, wofür auch auf Figur 2 mit dem entsprechenden Ablaufdiagramm hingewiesen wird. Der Karteninhaber erhält vom Kartenherausgeber die Chip-Karte mit den für die Karte typischen Funktionen und allenfalls Daten, im Bevorzugten also eine Karte mit PKI-Funktionen. Zu diesem Zeitpunkt sind aber weder PIN noch PUK in der Karte gespeichert und diese werden auch nicht durch einen speziellen Formularsatz an den Karteninhaber übermittelt, wie dies nach Stand der Technik erfolgt. Wenn der Karteninhaber die Karte das erste Mal benützen will, so wird er die Karte in das Lesegerät 6 oder in ein Lesegerät 12 einführen. Der Prozessor der Karte erkennt den erstmaligen Gebrauch und erzeugt den PUK-Kode, vorzugsweise als Zufallszahl und z.B. als eine Zufallszahl mit acht Ziffern. Der PUK wird von der Karte 1 an das Lesegerät 6 oder an das Lesegerät 12 und damit an den Rechner 10 abgegeben und auf der entsprechenden Anzeigeeinheit 7 bzw. 11 dem Karteninhaber angezeigt. Die Anzeigeeinheit fordert den Karteninhaber auf, sich diesen PUK für den allfälligen späteren Gebrauch zu notieren, wobei z.B. gleichzeitig auch informiert wird, was die Bedeutung des PUK-Kodes ist und welche Funktionen damit ausgeführt werden können. Nach einer Bestätigung des Karteninhabers durch eine beliebige Tastatureingabe, welche angibt dass er die Hinweise auf den PUK gelesen hat, wird er dazu aufgefordert, den PUK zwecks Bestätigung über das Eingabemittel einzugeben. Bevorzugterweise wird dabei oder vorgängig die Anzeige des vom Prozessor erzeugten PUK-Kodes gelöscht, so dass der Karteninhaber den PUK nicht einfach durch ein Abtippen der angezeigten Ziffern eingeben kann. Auf die Eingabeaufforderung gibt es grundsätzlich drei Möglichkeiten:
1. Der Karteninhaber gibt den PUK korrekt ein. Der eingegebene PUK wird an die Karte 1 bzw. den Prozessor 2 vom Lesegerät zurückgegeben und vom Prozessor mit dem erzeugten PUK verglichen. Bei der angenommenen korrekten Eingabe wird der PUK dann als gültig angesehen und vom Prozessor im Speicher 3 derart gespeichert, dass der PUK von diesem Zeitpunkt an weder geändert noch herausgelesen oder angezeigt werden kann, wie dies bei einem PUK-Kode üblicherweise der Fall ist;
2. Der Karteninhaber gibt einen nicht korrekten PUK-Kode ein. Auch dieser PUK wird vom Lesegerät an den Prozessor 2 zurückgemeldet und dort mit dem erzeugten PUK verglichen. Die Rückmeldung eines falschen PUK-Kodes bewirkt dann nicht die Abspeicherung des vom Prozessor erzeugten PUK-Kodes, sondern bewirkt eine erneute Aufforderung via das Lesegerät an den Karteninhaber, den PUK einzugeben. Zum Beispiel nach dreimaligem Falscheingeben wird der bisherige Vorgang abgebrochen und es wird bevorzugterweise eine neuer PUK generiert und dem Karteninhaber präsentiert, wiederum mit Hinweis auf dessen Bedeutung und der Aufforderung den PUK aufzuschreiben, um auf diesen für zukünftige Verwendung zugreifen zu können. Nach einer bestätigenden Tasteneingabe wird dann der Karteninhaber erneut zur Eingabe des dargestellten bzw. vorzugsweise bereits wieder gelöschten PUK-Kodes aufgefordert;
3. Der Karteninhaber hat den PUK-Kode nicht aufgeschrieben oder findet ihn nicht mehr und will daher keine PUK-Eingabe vornehmen. In diesem Fall kann der Karteninhaber entweder den Vorgang ganz abbrechen und die Chip-Karte aus dem Lesegerät nehmen, wobei in diesem Fall bei einer späteren Einführung der Chip-Karte in das Lesegerät der Vorgang erneut beginnt und erneut ein PUK-Kode erzeugt wird, oder aber der Karteninhaber kann die Chip-Karte im Lesegerät belassen und die Erzeugung eines neuen PUK-Kodes und dessen Anzeige auf die bereits beschriebene Weise veranlassen.

Der geschilderte Vorgang kann ebenfalls auf eine Maximalanzahl von Versuchen beschränkt werden oder aber kann solange vom Prozessor 2 durchgeführt werden, bis ein PUK-Kode korrekt bestätigt wurde und in der Karte definitiv gespeichert ist.

Das beschriebene bevorzugte Verfahren bzw. die entsprechend ausgestaltete Chip-Karte weist die bereits genannten Vorteile des Wegfalls der formularmässigen Übermittlung des Kodes auf. Der PUK-Kode wird erst beim Karteninhaber erzeugt und kann daher vorgängig nicht in unbefugte Hände fallen. Bei der bevorzugten Erzeugung einer Zufallszahl als PUK-Kode wird in der Regel ein "guter" PUK erzeugt und kein willkürlicher, durch den Karteninhaber gewählter Kode, der z.B. aus einer Reihe der gleichen Ziffern besteht. Dem Karteninhaber wird solange ein PUK präsentiert, bis ihn dieser korrekt bestätigt hat. Es wird dabei davon ausgegangen, dass der Karteninhaber den PUK nur bestätigen kann, wenn er ihn vorgängig auch aufgeschrieben hat, da bei der bevorzugten Ausführung der PUK zum Zeitpunkt der Bestätigungseingabe nicht mehr dargestellt wird. Es wird damit verhindert, dass der Karteninhaber den von der Chip-Karte präsentierten PUK nicht gebührend wahrnimmt und entsprechende Anzeigen löscht, ohne den PUK aufgeschrieben zu haben. Hat der Karteninhaber dabei das Gefühl, der erzeugte PUK-Kode sei ein schwacher Kode, z.B. 12345678 oder ein ihm nicht zusagender Kode, dann kann der Karteninhaber den erzeugten PUK verwerfen (nicht bestätigen) und einen neuen PUK erzeugen lassen.

Auch weitere Kodes können auf diese Weise erzeugt und gespeichert werden, z.B. auch der PIN-Kode. Dieser kann aber auch gemäss Stand der Technik dadurch erzeugt werden, dass der Karteninhaber einfach aufgefordert wird einen PIN selber zu wählen und einzugeben. Der PIN-Kode kann in der Regel ohnehin durch den Karteninhaber geändert werden, wenn er dies wünscht. Auf diese Weise ist bei der Produktion der Chip-Karte (Personalisierung) weder der PIN noch der PUK vorhanden. Weder PIN noch PUK befinden sich damit je ausserhalb des Verantwortungsbereich des Karteninhabers.

Die Erzeugung eines Kodes durch ein Speichermittel und dessen Übernahme durch identische Eingabe des Kodes kann natürlich auch bei anderen Chip-Karten als der im Beispiel erwähnten PKI-Karte verwendet werden, z.B. bei Chip-Karten für Mobiltelefone oder beliebige Chip-Karten mit Wertfunktion. Auch andere Speichermittel als Chip-Karten können auf diese Weise Zugriffs- oder Verwaltungskodewörter erzeugen und diese speichern.

## Patentansprüche

1. Verfahren zur Bereitstellung eines Kodes für den Zugriff auf ein Speichermittel (1), das mit einer den Zugriff erlaubenden oder sperrenden elektronischen Schaltung (2,3) versehen ist, insbesondere eines Kodes für den Zugriff auf eine Chip-Karte, dadurch gekennzeichnet, dass der Kode von der Schaltung bei deren benutzerseitigen Inbetriebnahme bei deren Verbindung mit einem temporär mit dem Speichermittel verbindbaren Anzeige- und Eingabemittel (6; 9) erzeugt und zur Anzeige abgegeben wird, und dass der Kode von der Schaltung als gültiger Kode übernommen wird, wenn am Eingabemittel der angezeigte Kode korrekt eingegeben und an die Schaltung übermittelt wird.

2. Verfahren nach Anspruch 1, dadurch gekennzeichnet, dass die Eingabe des Kodes erst freigegeben wird, wenn die Anzeige des Kodes bereits erloschen ist.

3. Verfahren nach Anspruch 1 oder 2, dadurch gekennzeichnet, dass bei der Eingabe eines zum erzeugten Kode nichtidentischen Kodes oder eines Abbruchbefehls eine erneute Erzeugung eines Kodes gestartet werden kann.

4. Verfahren nach einem der Ansprüche 1 bis 3, dadurch gekennzeichnet, dass der Kode ein nach dessen Übernahme nicht änderbarer Kode ist.

5. Verfahren nach einem der Ansprüche 1 bis 4, dadurch gekennzeichnet, dass der Kode ein Master-Kode (PUK-Kode) für den Zugriff auf Verwaltungsfunktionen einer Chip-Karte ist, insbesondere einer Chip-Karte für PKI-Anwendungen.

6. Speichermittel (1) mit einer den Zugriff auf dieses erlaubenden oder sperrenden elektronischen Schaltung (2,3), insbesondere eine Chip-Karte, welche zur Erzeugung eines Kodes, insbesondere einer Zufallszahl, zu dessen Abgabe an ein Lesegerät (6; 9), zum Empfang eines Kodes, und zum Vergleich des abgegebenen mit dem empfangenen Kodes ausgestaltet ist, dadurch gekennzeichnet, dass die Schaltung zur Übernahme des Kodes als gültigen Zugriffskode oder zur Erzeugung eines Freigabesignals zur erneuten Erzeugung eines Kodes in Abhängigkeit vom Vergleichsergebnis ausgestaltet ist.

7. Elektronische Schaltung, insbesondere Chip-Satz für eine Chip-Karte, dadurch gekennzeichnet, dass diese zur Durchführung des Verfahrens nach einem der Ansprüche 1 bis 5 ausgestaltet ist.
